# EUROPEAN PATENT SPECIFICATION

(11) **EP 3 141 725 B1**
(45) Date of publication and mention of the grant of the patent: **17.04.2019**
(21) Application number: 16178599.3
(22) Date of filing: 08.07.2016
(51) Int. Cl.: F02C 9/22

(54) **CONTROL SYSTEM AND METHOD OF CONTROLLING A VARIABLE AREA GAS TURBINE ENGINE**
STEUERUNGSSYSTEM UND VERFAHREN ZUR STEUERUNG EINES GASTURBINENMOTORS MIT VARIABLEM BEREICH
SYSTÈME DE COMMANDE ET PROCÉDÉ DE COMMANDE D'UN MOTEUR À TURBINE À GAZ À SECTION VARIABLE

(30) Priority: 11.09.2015 US 201514851907
(43) Date of publication of application: 15.03.2017
(73) Proprietor: United Technologies Corporation, Farmington, CT 06032 (US)
(72) Inventor: HANRAHAN, Paul H., Farmington, CT 06032-3245 (US); KUPRATIS, Daniel Bernard, Wallingford, CT 06492 (US)
(74) Representative: Dehns

(56) References cited:
- EP-A2- 2 573 331
- US-A- 4 252 498
- US-A1- 2014 000 272
- US-A1- 2014 182 297

## Description

### BACKGROUND

Gas turbine engines with variable area vanes can operate more fuel efficiently and with more power and without stalling when the variable area vane angles are accurately controlled. Some engines may include transducers that monitor the angles of such vanes during operation of the engine. Accordingly, it is desirable to provide methods of controlling the angles of the vanes during operation. A method of controlling a variable area gas turbine engine according to the prior art is shown in the document EP2573331.

### BRIEF DESCRIPTION

Disclosed herein is a method of controlling a variable area gas turbine engine according to claim 1.

The method includes, running the variable area turbine engine at initial settings, monitoring two sets of operating parameters of the engine at the initial settings, and deducing vane angles of adjustable vanes without directly measuring the vane angles from mapped data of the two sets of operating parameters of a similar engine operated while direct vane angle measurements were being recorded.

In addition to one or more of the features described above, in further embodiments the at least one set of operating parameters includes one or more of, low-pressure rotational rotor speed (N1), engine pressure ratio (EPR), Mach-number (M), altitude, trims and discretes.

In addition to one or more of the features described above, or as an alternative, in further embodiments the at least one set of operating parameters includes one or more of high-pressure rotational rotor speed (N2) and engine pressure ratio (EPR).

In addition to one or more of the features described above, or as an alternative, in further embodiments the at least one set of operating parameters includes one or more of high-pressure rotational rotor speed (N2), Inlet Pressure (P2), and Burner Pressure (Pb).

In addition to one or more of the features described above, or as an alternative, in further embodiments the at least one set of operating parameters includes one or more of high-pressure rotational rotor speed (N2), compressor inlet pressure (P2.5), and Burner Pressure (Pb).

In addition to one or more of the features described above, or as an alternative, in further embodiments the at least one set of operating parameters includes one or more of low-pressure rotational rotor speed (N1), high-pressure rotational rotor speed (N2), engine pressure ratio (EPR).

In addition to one or more of the features described above, or as an alternative, in further embodiments the at least one set of operating parameters includes one or more of low-pressure rotational rotor speed (N1), high-pressure rotational rotor speed (N2), and compressor inlet pressure (P2.5).

In addition to one or more of the features described above, or as an alternative, in further embodiments the at least one set of operating parameters includes one or more of, high-pressure rotational rotor speed (N2), compressor inlet temperature (T2.5), low-pressure rotational rotor speed (N1), engine pressure ratio (EPR), Mach-number (M), altitude, trims and discretes.

In addition to one or more of the features described above, or as an alternative, in further embodiments the method includes deducing a second set of vane angles of the adjustable vanes from mapped data for a at least one second set of operating parameters of the similar engine operated under similar conditions and further adjusting the angles of the adjustable vanes toward the desired vane angles.

In addition to one or more of the features described above, in further embodiments the method includes adjusting actual angles of the adjustable vanes toward desired vane angles.

In addition to one or more of the features described above, or as an alternative, in further embodiments the high pressure compressor corrected flow is corrected based on inlet temperatures.

In addition to one or more of the features described above, in further embodiments the method includes requesting adjustment to the actual angles of the vanes toward the desired vane angles.

In addition to one or more of the features described above, in further embodiments the method includes determining errors in the adjustment made to the vane angles.

Further disclosed herein is a system for providing information relating to adjustable vanes of a turbine engine. The system includes a digital engine controller configured to deduce an angle of the adjustable vanes without direct measurement of the angle based on input variables related to operating parameters of the turbine engine while running, the deducing being based on two sets of input variables mapped during running of another turbine engine that had the vane angle measured while running control system for adjusting angles of an adjustable vane of a turbine engine.

In addition to one or more of the features described above, in further embodiments the digital engine controller determines adjustments needed to move actual vane angle toward a desired vane angle.

In addition to one or more of the features described above, or as an alternative, in further embodiments the angle is deduced by averaging two separately deduced vane angles from two different sets of input variables.

Further disclosed herein is a gas turbine engine with a system for providing information relating to adjustable vanes of a turbine engine. The gas turbine engine and system includes a digital engine controller configured to deduce an angle of the adjustable vanes without direct measurement of the angle based on input variables related to operating parameters of the turbine engine while running, the deducing being based on two sets of input variables mapped during running of another turbine engine that had the vane angle measured while running.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 depicts a schematical illustration of a gas turbine engine, according to an embodiment;
FIG. 2 depicts a schematic illustration of a portion of a variable area gas turbine engine and system for controlling operation of adjustable vanes, according to an embodiment;
FIG. 3 depicts a process disclosed herein for controlling the variable area gas turbine engine of FIG. 2, according to an embodiment; and
FIG. 4 depicts a mapped data for use in controlling variable area gas turbine engines, according to an embodiment.

### DETAILED DESCRIPTION

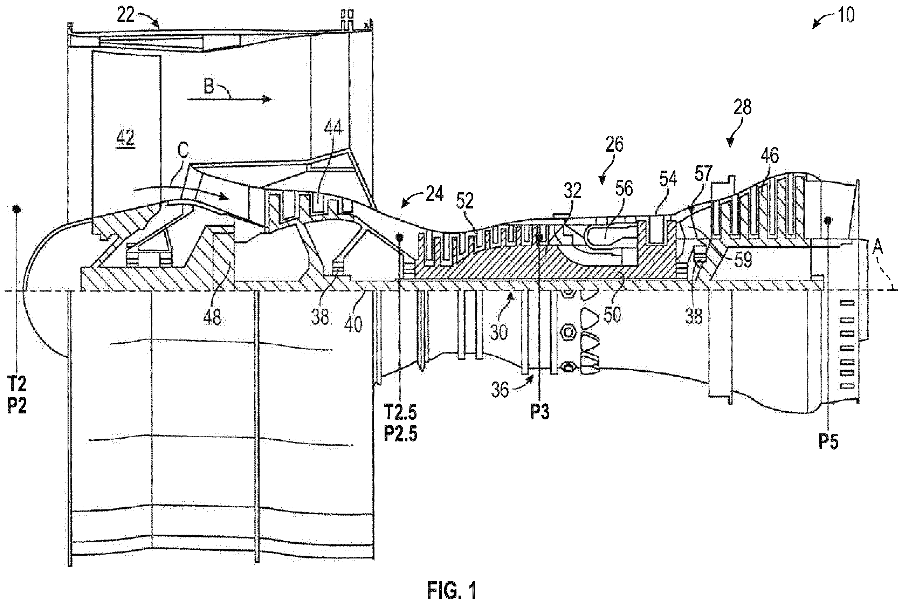

Figure 1 schematically illustrates a gas turbine engine 10 that can be used to power an aircraft, for example. The gas turbine engine 10 is disclosed herein as a two-spool turbofan that generally incorporates a fan section 22, a compressor section 24, a combustor section 26 and a turbine section 28. Alternative engines might include an augmentor section, or a third spool (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 10 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The engine 10 is, in one embodiment, a high-bypass geared aircraft engine. In another embodiment, the engine 10 bypass ratio is greater than about eleven (11), with one example embodiment having a bypass ratio in the range of eleven (11) to seventeen (17), and another example embodiment having a bypass ratio in the range of eleven and six tenths (11.6) to fifteen (15), and a further example embodiment being approximately eleven and seven tenths (11.7). The geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 10 bypass ratio is greater than about eleven (11:1), the fan diameter is larger than that of the low pressure compressor 44, and the low pressure turbine 46 has a pressure ratio that is greater than about 5:1. Low pressure turbine 46 pressure ratio is pressure measured prior to an inlet of the low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow due to the high bypass ratio. The fan section 22 of the engine 10 is designed for a particular flight condition - typically cruise at about Mach 0.8 and about 35,000 feet (about 10,700 metres). The flight condition of Mach 0.8 and 35,000 ft (10,700 m), with the engine at its best fuel consumption - also known as "bucket cruise Thrust Specific Fuel Consumption ('TSFC')" - is the industry standard parameter of Ibm (kg) of fuel being burned divided by Ibf (N) of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft/second (about 350 m/sec).

Existing turbine engine models, such as direct drive turbine engines, increase the bypass ratio of turbine engines by increasing the fan size, thereby increasing the amount of air that is drawn through the gas path of such engines. The large fan size necessitates an increased number of low pressure turbine stages in order to drive the fan at sufficient speeds. The additional turbine stages result in a heavier turbine engine where the number of low pressure turbine stages exceeds the number of low pressure compressor stages.

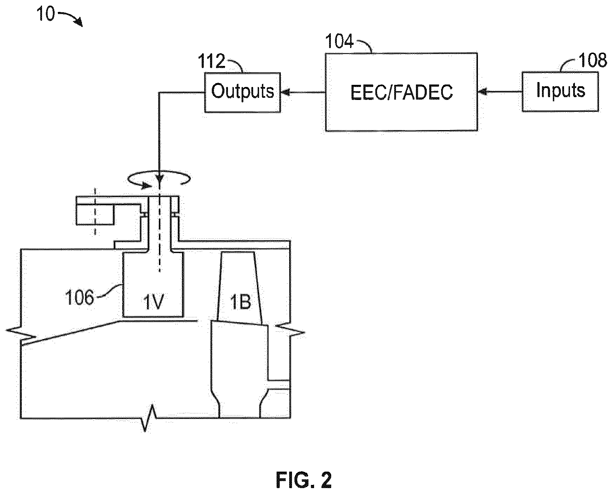

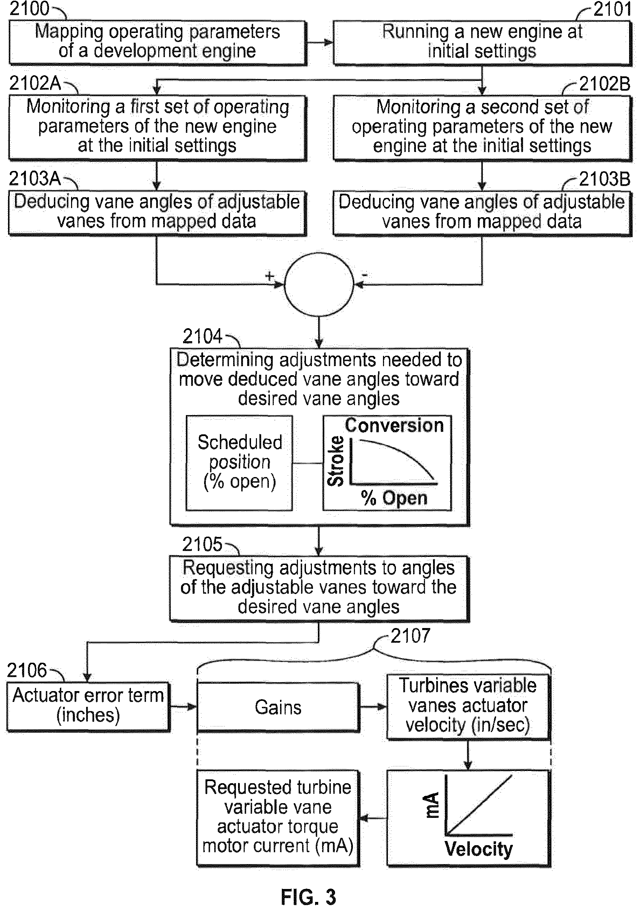

FIG. 2 depicts a portion of the variable area gas turbine engine 10 and control system 104 and FIG. 3 depicts a method disclosed herein of controlling among other things variable angle vanes 106 (either compressor vanes or turbine vanes) of the variable area gas turbine engine 10. The control system 104 comprises a Full Authority Digital Engine Control (FADEC) that includes an engine electronic control or EEC. The EEC is in essence, a computer which along with its related accessories controls aspects of the engine 10 and its performance. The FADEC receives multiple input variables related to operating parameters as will be discussed in more detail below. These inputs 108 are received by the EEC and analyzed numerous times per second. Engine operating parameters or outputs 112 such as fuel flow, bleed valve position, and others are computed from this data and applied as appropriate.

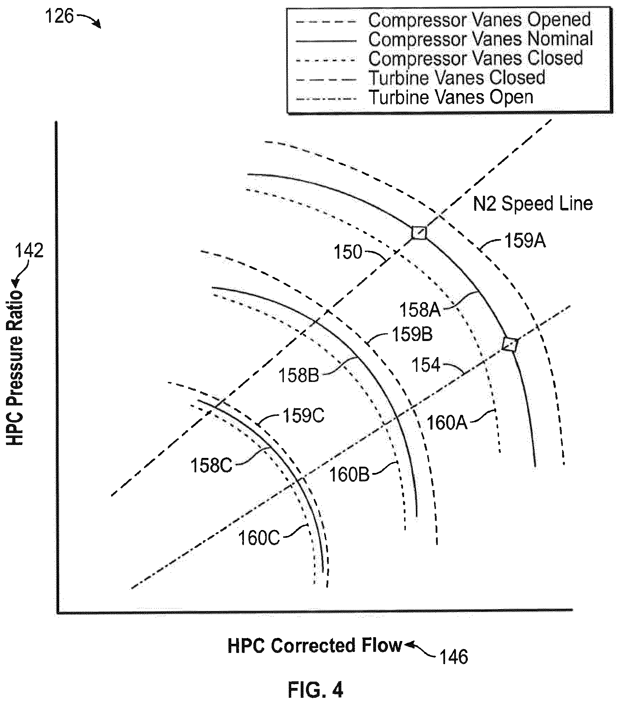

The method starts at box 2100 by mapping data sets of specific operational parameters, which may be performed by running a variable area turbine engine 10 through various operational schedules, or by executing computational models to model the operation of an engine. The data gathered can be represented in the form of graphs, such as is shown in FIG. 4, or in the form of equations, either way referred to hereunder as mapped data. The mapped data includes vane angles (for both compressor vanes and turbine vanes) as measured throughout a full range between and including fully open and fully closed. This mapped data will be used to deduce vane angles of engines while in operation thereby negating a need to take actual vane angle measurements while the engines are in operation. Specific parameters of the mapped data will be discussed in more detail below.

Newly manufactured engines, hereinafter called "new engines", are run at initial settings 2101. These initial settings may be selected based on parameters to conservatively operate the new engine. After a period of time (or after temperatures of portions of the new engine have reached selected levels, for example, or other selected milestones have been achieved), data similar to the mapped data is monitored for a first data set at block 2102A, and for a second data set at block 2102B. In one embodiment two sets of data (operating parameters) are monitored. The monitored data is used to deduce two separate vane angles 2103A, 2103B of the single set of adjustable vanes 106 of the new engine based on the two sets of operating parameters in the mapped data. An average is taken between the two separate deduced vane angles. A determination is made regarding how much adjustment of the angles is needed to move the deduced vane angles to a desired vane angle 2104. Requests are then made to adjust the angle as determined 2105. It should be noted that weighting of the two deduced angles need not be equal. This could be helpful if one of the data sets has been shown to have greater accuracy than the other, for example. Actual errors in the adjustment are determined by comparing newly deduced angles to previously deduced angles 2106. As an example, it may be desirable to set the vane angle to 11.0 degrees. The first deduced vane angle could be 11.5 degrees and the second deduced vane angle could be 12.0 degrees. Averaging these together (with equal weighting) would yield 11.75 degrees, meaning the angle is off the desired set angle by 0.75 degrees. Determined adjustments could aim to move the vane by 0.75 degrees to achieve the desired 11.0 degree angle.

Depending upon the specific actuators installed, gains can be determined 2107 to minimize any over or under damping of the actuator system due to variations in tolerances of the hardware, for example. There are several methods of deducing vane position from engine parameter feedback. As the variable turbine vanes 106 are known to change the relative rotational speeds of the high-pressure spools and low-pressure spools, readings of the two spool speeds can be used. The variable turbine vanes 106 also change the relationship between compression ratio and rotor speed, so that readings of the pressures at the inlet of the compressor and at the discharge of the compressor along with rotor speed, can be used.

The sets of operating parameters can include one or more of, low-pressure rotational rotor speed (N1), engine pressure ratio (EPR), Inlet Pressure (P2), Inlet Temperature (T2), high-pressure rotational rotor speed (N2), compressor inlet temperature (T2.5), compressor inlet pressure (P2.5), Burner Pressure (Pb) for example, or parameters that would come from the aircraft controller, such as Mach-number (M), altitude, plus trims and discretes, for example.

Referring to FIG. 4, correlations in the mapped data 126 can be represented by a graph, for example. The graph illustrated shows operating parameters on a high pressure compressor pressure ratio 142 versus high pressure compressor corrected flow 146 graph (the method step of mapping operating parameters is shown as box 2100 at the beginning of FIG. 3) for various vane angles, with a closed turbine vane angle line 150 and an open turbine vane angle line 154 line being illustrated. In the illustrated embodiment lines 158A-C in the mapped data 126 represent lines of constant speed for the high-pressure rotational rotor speed (N2) for compressor vanes that are set at nominal angles. Dashed lines 159A-C represent constant speed with the compressor vane angles set to open positions while dotted lines 160A-C represent constant speed with the compressor vane angles set to closed positions. The high pressure compressor corrected flow 146 is corrected based on inlet temperature that is monitored while the mapped data 146 is gathered. The new engine can operate more fuel efficiently with more power and without stalling when the vane angles are more accurately controlled by the methods disclosed herein.

In an exemplary embodiment, the engine electronic control and/or FADEC comprises a microprocessor, microcontroller or other equivalent processing device capable of executing commands of computer readable data or program for executing a control algorithm and/or algorithms that control the angles of the adjustable vanes 106 of the new engine. In order to perform the prescribed functions and desired processing, as well as the computations therefore (e.g., the execution of Fourier analysis algorithm(s), the control processes prescribed herein, and the like), the controller may include, but not be limited to, a processor(s), computer(s), memory, storage, register(s), timing, interrupt(s), communication interfaces, and input/output signal interfaces, as well as combinations comprising at least one of the foregoing. For example, the controller may include input signal filtering to enable accurate sampling and conversion or acquisitions of such signals from communications interfaces relating to operating parameters. As described above, exemplary embodiments of the disclosure can be implemented through computer-implemented processes and apparatuses for practicing those processes.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the spirit and scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method of controlling a variable area gas turbine engine (10), comprising:
running the variable area turbine engine at initial settings (2101);
monitoring two sets (2102A, 2102B) of operating parameters of the engine at the initial settings; and
deducing vane angles (2103A, 2103B) of adjustable vanes (106) without directly measuring the vane angles from mapped data (2100) of the two sets (2102A, 2102B) of operating parameters of a similar engine operated while direct vane angle measurements were being recorded.

2. The method of controlling a variable area gas turbine engine of claim 1, wherein the at least one set of operating parameters (2102A, 2102B) includes one or more of, low-pressure rotational rotor (30) speed (N1), engine pressure ratio (EPR), Mach-number (M), altitude, trims and discretes.

3. The method of controlling a variable area gas turbine engine of claim 1, wherein the at least one set of operating parameters (2102A, 2102B) includes one or more of high-pressure rotational rotor (32) speed (N2), Inlet Pressure (P2), and Burner (56) Pressure (Pb).

4. The method of controlling a variable area gas turbine engine of claim 1, wherein the at least one set of operating parameters (2102A, 2102B) includes one or more of high-pressure rotational rotor (32) speed (N2), compressor inlet pressure (P2.5), and Burner (56) Pressure (Pb).

5. The method of controlling a variable area gas turbine engine of claim 1, wherein the at least one set of operating parameters (2102A, 2102B) includes one or more of low-pressure rotational rotor (30) speed (N1), high-pressure rotational rotor (32) speed (N2), engine pressure ratio (EPR).

6. The method of controlling a variable area gas turbine engine of claim 1, wherein the at least one set of operating parameters (2102A, 2102B) includes one or more of low-pressure rotational rotor (30) speed (N1), high-pressure rotational rotor (32) speed (N2), and compressor inlet pressure (P2.5).

7. The method of controlling a variable area gas turbine engine of claim 1, wherein the at least one set of operating parameters (2102A, 2102B) includes one or more of, high-pressure rotational rotor (32) speed (N2), compressor (52) inlet temperature (T2.5), low-pressure rotational rotor (30) speed (N1), engine pressure ratio (EPR), Mach-number (M), altitude, trims and discretes.

8. The method of controlling a variable area gas turbine engine of any preceding claim, further comprising deducing a second set of vane angles (2103B) of the adjustable vanes (106) from mapped data (2100) for a at least one second set of operating parameters (2102B) of the similar engine operated under similar conditions and further adjusting the angles of the adjustable vanes (106) toward the desired vane angles.

9. The method of controlling a variable area gas turbine engine of any preceding claim, further comprising adjusting actual angles of the adjustable vanes (106) toward desired vane angles.

10. The method of controlling a variable area gas turbine engine of claim 3, wherein the high pressure compressor (52) corrected flow is corrected based on inlet temperatures (T2).

11. The method of controlling a variable area gas turbine engine of any of claims 1 to 8, further comprising requesting (2105) adjustment to the actual angles of the vanes (106) toward the desired vane angles.

12. The method of controlling a variable area gas turbine engine of any preceding claim, further comprising determining (2106) errors in the adjustment made to the vane angles.

13. A system (100) for providing information relating to adjustable vanes (106) of a turbine engine (10), comprising a digital engine controller (104) configured to deduce an angle of the adjustable vanes without direct measurement of the angle based on input variables (108) related to operating parameters of the turbine engine while running, the deducing being based on two sets (2102A, 2102B) of input variables mapped (2100) during running of another turbine engine that had the vane angle measured while running.

14. The system of claim 13, wherein the digital engine controller determines adjustments (112) needed to move actual vane angle toward a desired vane angle, the angle preferably being deduced by averaging two separately deduced vane angles from two different sets of input variables.

15. A gas turbine engine with a system for providing information (108) relating to adjustable vanes of a turbine engine as claimed in claim 13 or 14.

## Patentansprüche

1. Verfahren zur Steuerung eines Gasturbinentriebwerks (10) mit variablem Bereich, umfassend:
Betreiben des Gasturbinentriebwerks mit variablem Bereich mit der Grundeinstellung (2101);
Überwachen von zwei Sätzen (2102A, 2102B) von Betriebsparametern des Triebwerks bei der Grundeinstellung; und
Ableiten der Schaufelwinkel (2103A, 2103B) verstellbarer Schaufeln (106) ohne direktes Messen der Schaufelwinkel aus kartierten Daten (2100) der zwei Sätze (2102A, 2102B) von Betriebsparametern eines ähnlichen Triebwerks, das betrieben wurde, während direkte Schaufelwinkelmessungen erfasst wurden.

2. Verfahren zur Steuerung eines Gasturbinentriebwerks mit variablem Bereich nach Anspruch 1, wobei der mindestens eine Satz von Betriebsparametern (2102A, 2102B) eines oder mehrere aus Niederdruck-Rotor(30)-Drehzahl (N1), Triebwerks-Druckverhältnis (EPR), Mach-Zahl (M), Höhe, Trimm und diskreten Elementen umfasst.

3. Verfahren zur Steuerung eines Gasturbinentriebwerks mit variablem Bereich nach Anspruch 1, wobei der mindestens eine Satz von Betriebsparametern (2102A, 2102B) eines oder mehrere aus Hochdruck-Rotor(32)-Drehzahl (N2), Einlassdruck (P2) und Brenner(56)-Druck (Pb) umfasst.

4. Verfahren zur Steuerung eines Gasturbinentriebwerks mit variablem Bereich nach Anspruch 1, wobei der mindestens eine Satz von Betriebsparametern (2102A, 2102B) eines oder mehrere aus Hochdruck-Rotor(32)-Drehzahl (N2), Verdichtereinlassdruck (P2.5) und Brenner(56)-Druck (Pb) umfasst.

5. Verfahren zur Steuerung eines Gasturbinentriebwerks mit variablem Bereich nach Anspruch 1, wobei der mindestens eine Satz von Betriebsparametern (2102A, 2102B) eines oder mehrere aus Niederdruck-Rotor(30)-Drehzahl (N1), Hochdruck-Rotor(32)-Drehzahl (N2), Triebwerks-Druckverhältnis (EPR) umfasst.

6. Verfahren zur Steuerung eines Gasturbinentriebwerks mit variablem Bereich nach Anspruch 1, wobei der mindestens eine Satz von Betriebsparametern (2102A, 2102B) eines oder mehrere aus Niederdruck-Rotor(30)-Drehzahl (N1), Hochdruck-Rotor(32)-Drehzahl (N2) und Verdichtereinlassdruck (P2.5) umfasst.

7. Verfahren zur Steuerung eines Gasturbinentriebwerks mit variablem Bereich nach Anspruch 1, wobei der mindestens eine Satz von Betriebsparametern (2102A, 2102B) eines oder mehrere aus Hochdruck-Rotor(32)-Drehzahl (N2), Verdichter(52)-Einlasstemperatur (T2.5), Niederdruck-Rotor(30)-Drehzahl (N1), Triebwerks-Druckverhältnis (EPR), Mach-Zahl (M), Höhe, Trimms und diskreten Elementen umfasst.

8. Verfahren zur Steuerung eines Gasturbinentriebwerks mit variablem Bereich nach einem der vorstehenden Ansprüche, ferner umfassend das Ableiten eines zweiten Satzes von Schaufelwinkeln (2103B) der verstellbaren Schaufeln (106) aus kartierten Daten (2100) für mindestens einen zweiten Satz von Betriebsparametern (2102B) des ähnlichen Triebwerks, das unter ähnlichen Bedingungen betrieben wurde, und ferner das Verstellen der Winkel der verstellbaren Schaufeln (106) in Richtung auf die erwünschten Schaufelwinkel.

9. Verfahren zur Steuerung eines Gasturbinentriebwerks mit variablem Bereich nach einem der vorstehenden Ansprüche, ferner umfassend das Verstellen tatsächlicher Winkel der verstellbaren Schaufeln (106) in Richtung auf erwünschte Schaufelwinkel.

10. Verfahren zur Steuerung eines Gasturbinentriebwerks mit variablem Bereich nach Anspruch 3, wobei der korrigierte Strom des Hochdruckverdichters (52) basierend auf der Einlasstemperatur (T2) korrigiert wird.

11. Verfahren zur Steuerung eines Gasturbinentriebwerks mit variablem Bereich nach einem der Ansprüche 1 bis 8, ferner umfassend das Anfordern (2105) der Verstellung der tatsächlichen Winkel der Schaufeln (106) in Richtung auf die erwünschten Schaufelwinkel.

12. Verfahren zur Steuerung eines Gasturbinentriebwerks mit variablem Bereich nach einem der vorstehenden Ansprüche, ferner umfassend das Ermitteln (2106) von Fehlern bei der Verstellung, die an den Schaufelwinkeln vorgenommen wurde.

13. System (100) zum Bereitstellen von Informationen in Bezug auf verstellbare Schaufeln (106) eines Turbinentriebwerks (10), umfassend eine digitale Triebwerksteuerung (104), die konfiguriert ist, um einen Winkel der verstellbaren Schaufeln ohne direktes Messen des Winkels basierend auf Eingangsvariablen (108) bezogen auf Betriebsparameter des Turbinentriebwerks im Betrieb abzuleiten, wobei das Ableiten auf zwei Sätzen (2102A, 2102B) von Eingangsvariablen basiert, die kartiert wurden (2100), während ein anderes Turbinentriebwerk, dessen Schaufelwinkel im Betrieb gemessen wurde, betrieben wurde.

14. System nach Anspruch 13, wobei die digitale Triebwerksteuerung Verstellungen (112) bestimmt, die erforderlich sind, um tatsächliche Schaufelwinkel in Richtung auf einen erwünschten Schaufelwinkel zu bewegen, wobei der Winkel vorzugsweise durch Mittelung von zwei getrennt abgeleiteten Schaufelwinkeln aus zwei unterschiedlichen Sätzen von Eingangsvariablen abgeleitet ist.

15. Gasturbinentriebwerk mit einem System zum Bereitstellen von Informationen (108) in Bezug auf verstellbare Schaufeln eines Turbinentriebwerks nach Anspruch 13 oder 14.

## Revendications

1. Procédé de commande d'un moteur à turbine à gaz à section variable (10), comprenant :
la mise en marche du moteur à turbine à section variable aux réglages initiaux (2101) ;
la surveillance de deux ensembles (2102A, 2102B) de paramètres de fonctionnement du moteur aux réglages initiaux ; et
la déduction d'angles d'aubes (2103A, 2103B) d'aubes réglables (106) sans mesure directe des angles d'aubes à partir de données mappées (2100) des deux ensembles (2102A, 2102B) de paramètres de fonctionnement d'un moteur similaire fonctionnant alors que des mesures d'angles d'aubes étaient en cours d'enregistrement.

2. Procédé de commande d'un moteur à turbine à gaz à section variable selon la revendication 1, dans lequel l'au moins un ensemble de paramètres de fonctionnement (2102A, 2102B) inclut un ou plusieurs parmi vitesse (N1) de rotation de rotor à basse pression (30), rapport de pression moteur (EPR), nombre de Mach (M), altitude, compensations et données discrètes.

3. Procédé de commande d'un moteur à turbine à gaz à section variable selon la revendication 1, dans lequel l'au moins un ensemble de paramètres de fonctionnement (2102A, 2102B) inclut une ou plusieurs parmi vitesse (N2) de rotation de rotor à haute pression (32), pression d'admission (P2) et pression (Pb) de la chambre de combustion (56).

4. Procédé de commande d'un moteur à turbine à gaz à section variable selon la revendication 1, dans lequel l'au moins un ensemble de paramètres de fonctionnement (2102A, 2102B) inclut une ou plusieurs parmi vitesse (N2) de rotation de rotor à haute pression (32), pression d'admission de compresseur (P2.5) et pression (Pb) de la chambre de combustion (56).

5. Procédé de commande d'un moteur à turbine à gaz à section variable selon la revendication 1, dans lequel l'au moins un ensemble de paramètres de fonctionnement (2102A, 2102B) inclut un ou plusieurs parmi vitesse (N1) de rotation de rotor à basse pression (30), vitesse (N2) de rotation de rotor à haute pression (32), rapport de pression moteur (EPR).

6. Procédé de commande d'un moteur à turbine à gaz à section variable selon la revendication 1, dans lequel l'au moins un ensemble de paramètres de fonctionnement (2102A, 2102B) inclut un ou plusieurs parmi vitesse (N1) de rotation de rotor à basse pression (30), vitesse (N2) de rotation de rotor à haute pression (32) et pression d'admission de compresseur (P2.5).

7. Procédé de commande d'un moteur à turbine à gaz à section variable selon la revendication 1, dans lequel l'au moins un ensemble de paramètres de fonctionnement (2102A, 2102B) inclut un ou plusieurs parmi vitesse (N2) de rotation de rotor à haute pression (32), température d'admission de compresseur (52) (T2.5), vitesse (N1) de rotation de rotor à basse pression (30), rapport de pression moteur (EPR), nombre de Mach (M), altitude, compensations et données discrètes.

8. Procédé de commande d'un moteur à turbine à gaz à section variable selon une quelconque revendication précédente, comprenant en outre la déduction d'un second ensemble d'angles d'aubes (2103B) des aubes réglables (106) à partir de données mappées (2100) pour au moins un second ensemble de paramètres de fonctionnement (2102B) du moteur similaire fonctionnant dans des conditions similaires et réglant en outre les angles des aubes réglables (106) vers les angles d'aubes souhaités.

9. Procédé de commande d'un moteur à turbine à gaz à section variable selon une quelconque revendication précédente, comprenant en outre le réglage des angles réels des aubes réglables (106) vers les angles d'aubes souhaités.

10. Procédé de commande d'un moteur à turbine à gaz à section variable selon la revendication 3, dans lequel le débit corrigé du compresseur haute pression (52) est corrigé sur la base de températures d'admission (T2).

11. Procédé de commande d'un moteur à turbine à gaz à section variable selon l'une quelconque des revendications 1 à 8, comprenant en outre la demande (2105) le réglage des angles réels des aubes (106) vers les angles d'aubes souhaités.

12. Procédé de commande d'un moteur à turbine à gaz à section variable selon une quelconque revendication précédente, comprenant en outre la détermination (2106) d'erreurs du réglage réalisé sur les angles d'aubes.

13. Système (100) pour fournir des informations relatives aux aubes réglables (106) d'un moteur à turbine (10), comprenant un dispositif de commande numérique de moteur (104) configuré pour déduire un angle des aubes réglables sans mesure directe de l'angle sur la base de variables d'entrée (108) relatives aux paramètres de fonctionnement du moteur à turbine lorsqu'il est en marche, la déduction étant basée sur deux ensembles (2102A, 2102B) de variables d'entrée mappées (2100) au cours de la marche d'un autre moteur à turbine dont l'angle d'aube avait été mesuré lorsqu'il était en marche.

14. Système selon la revendication 13, dans lequel le dispositif de commande numérique de moteur détermine les réglages (112) nécessaires pour déplacer l'angle d'aube réel vers un angle d'aube souhaité, l'angle étant de préférence déduit par le calcul de la moyenne de deux angles d'aubes déduits séparément à partir de deux ensembles différents de variables d'entrée.

15. Moteur à turbine à gaz avec un système pour fournir des informations (108) relatives aux aubes réglables d'un moteur à turbine selon la revendication 13 ou 14.
